**Europäisches Patentamt**

**European Patent Office**

**Office européen des brevets**

(19)

(11) Veröffentlichungsnummer: **0 122 297**
**B1**

# (12) EUROPÄISCHE PATENTSCHRIFT

(45) Veröffentlichungstag der Patentschrift:
22.07.87

(21) Anmeldenummer: **83103260.2**

(22) Anmeldetag: **02.04.83**

(51) Int. Cl.⁴: **B 23 D 33/10**

---

(54) **Fehler-Detektionseinrichtung zum Einbau in eine Blechschere.**

---

(43) Veröffentlichungstag der Anmeldung:
24.10.84 Patentblatt 84/43

(45) Bekanntmachung des Hinweises auf die Patenterteilung:
22.07.87 Patentblatt 87/30

(84) Benannte Vertragsstaaten:
**BE CH DE FR GB IT LI NL**

(56) Entgegenhaltungen:
**DE-A-2 325 519**
**US-A-1 892 327**
**US-A-1 900 933**
**US-A-3 600 993**

(73) Patentinhaber: **KARGES- HAMMER- MASCHINEN GmbH & Co. KG, Frankfurter Strasse 36, D-3300 Braunschweig (DE)**

(72) Erfinder: **Lauckner, Gerhard, Lindenerstrasse 69, D-3340 Wolfenbüttel (DE)**
Erfinder: **Quiska, Rudolf, Greifswaldstrasse 69, D-3300 Braunschweig (DE)**

(74) Vertreter: **Gramm, Werner, Prof. Dipl.- Ing., Patentanwälte Gramm + Lins Theodor- Heuss- Strasse 2, D-3300 Braunschweig (DE)**

EP 0 122 297 B1

## Beschreibung

Die Erfindung betrifft eine Fehler-Detektionseinrichtung mit einem Sensor und einer durch dessen Ausgangssignal gesteuerten Auswertungseinrichtung, zum Einbau in eine Blechschere, in der von einer Blechtafel jeweils Streifen gleicher Breite abgeschnitten werden, wobei die Blechtafel taktweise unter dem Schnittwerkzeug um die gewünschte Streifenbreite plus ein Sicherheitsmaß vorgefördert und dann durch eine Rückzugseinrichtung um das genannte Sicherheitsmaß entgegen der genannten Vorschubrichtung mit ihrer Blechtafel-Hinterkante gegen in den Blechtafel-Rückschubweg eingesteuerte, die exakte Streifenbreite definierende Anschläge zurückgeschoben wird, von denen für jede Blechtafelposition zwei mit Abstand nebeneinander angeordnet sind.

Die Blechtafeln werden in mehrere Streifen zerschnitten, wobei für jeden Schnitt die Hinterkante der Blechtafel die Bezugskante bildet. Für jede Blechtafelposition müssen daher zwei Anschläge vorgesehen sein, so daß eine Blechschere mit z. B. sieben Anschlagpaaren bestückt ist. Hinter der Blechschere werden die Streifen auf Paletten gestapelt und dann einem Stanzautomaten zugeführt, wo aus jedem Streifen z. B. Dosendeckel gestanzt werden. Um die Stanzabfälle möglichst gering zu halten, finden bei der Herstellung von z. B. Dosendeckeln Zick-Zack-Scheren Verwendung, die einen wellenförmig verlaufenden Trennschnitt ausführen, der der späteren Lage der Deckelausstanzungen angepaßt ist. Außerdem werden die Deckelausstanzungen so dicht nebeneinander angeordnet, daß die Stege des von jedem Streifen übrig bleibenden Abfallgitters nur noch eine Breite von 1 bis 1,5 mm aufweisen. Berücksichtigt man ferner die außerordentlich hohen Arbeitsgeschwindigkeiten im Stanzautomaten, dann müssen an die Maßhaltigkeit der auf der Blechschere hergestellten Streifen sehr hohe Anforderungen gestellt werden, wenn ein späteres Verklemmen des Streifens im Stanzautomaten, eine Beschädigung der Stanzwerkzeuge o.dgl. verhindert werden sollen. Wegen der hohen Takt-Vorschubgeschwindigkeiten beim Durchlauf der Blechtafel durch die Blechschere läßt sich ein präzises Abbremsen der Blechtafel in der vorgesehenen Schnittposition nicht mit der notwendigen Sicherheit erreichen. Deshalb erfolgt der taktweise Vorschub um eine bestimmte Wegstrecke über die gewünschte Schnittposition hinaus. Die Blechtafel wird dann von einer Rückzugseinrichtung gegen Anschläge zurückgeschoben, die in der Regel Klinken sind, die jeweils um eine parallel zur Förderebene und quer zur Vorschubrichtung angeordnete Achse verschwenkbar sind, von der vorgeförderten Blechtafel angehoben werden und nach dem Passieren der Blechtafel-Hinterkante selbsttätig in den Blechtafel-Rückschubweg einfallen. Die Rückzugseinrichtung kann z. B. aus ständig angetriebenen Rollen, Walzen o.dgl. bestehen, die nach erfolgtem Blechtafelvorschub auf die Blechtafel abgesenkt bzw. von unten gegen die Blechtafel angehoben werden und diese durch Reibschluß gegen die genannten Anschläge zurückschieben.

Die exakte Schnittposition ist somit nur dann erreicht, wenn die Blechtafel mit ihrer Hinterkante an beiden Anschlägen anliegt. Eine Kontrolle dafür, ob diese Voraussetzung tatsächlich erfüllt ist, ist bisher nicht vorgesehen. Jedoch hat sich in der Praxis gezeigt, daß beispielsweise bei eingefetteten Blechtafeln kein exakter Reibschluß zwischen Rückzugseinrichtung und Blechtafel erzielt wird, so daß letztere mit ihrer Hinterkante beispielsweise nur an einem Anschlag anliegt, was einen nicht winkelgerechten Schnitt zur Folge hat. Dies wird jedoch erst dann entdeckt, wenn dieser Streifen bei seiner Verarbeitung im Stanzautomaten Störungen hervorruft. Da die aus der Blechschere kommenden Streifen in der Regel nicht unmittelbar in den Stanzautomaten eingespeist, sondern in einem Zwischenpuffer bevorratet werden, können z. B. bei nicht korrekt arbeitender Rückzugseinrichtung unter Umständen mehrere Tonnen Ausschuß produziert werden, bevor dieser Fehler aufgrund von Störungen im Stanzautomaten entdeckt wird.

Der Erfindung liegt somit die Aufgabe zugrunde, eine Fehler-Detektionseinrichtung zu entwickeln, um eine kontinuierliche, automatisch arbeitende Kontrolle über die Einhaltung der exakten Streifenbreite zu erhalten.

Diese Aufgabe wird gemäß der Erfindung dadurch gelöst, daß jedem Anschlag ein ihn in Vorschubrichtung etwas überragender Taster zugeordnet ist, der mit dem zugeordneten Anschlag in den Rückschubweg der Blechtafel einsteuerbar und gegen die Wirkung einer Feder zumindest bis auf die Position des zugeordneten Anschlages um einen Schaltweg rückverschiebbar gelagert ist, in den ein Sensor ragt, der bei Erreichen eines bestimmten Minimum-Schaltweges sein Ausgangssignal ändert, das zusammen mit dem Ausgangssignal des zweiten Sensors eine Auswertungseinrichtung steuert.

Erfindungsgemäß wird somit nicht die Breite des aus der Blechschere kommenden Blechstreifens, sondern ausschließlich die exakte Positionierung der Blechtafel vor Durchführung des Trennschnittes zur Erzeugung des Blechstreifens gemessen. Dies ist steuerungstechnisch einfacher durchführbar als die Breitenmessung jedes Blechstreifens. Vor allem aber läßt sich die Fehler-Detektionseinrichtung in einem Maschinenbereich vorsehen, wo ausreichend Platz zur Installation vorhanden ist.

Um nicht für jede Klinke einen Sensor vorsehen zu müssen, ist es vorteilhaft, wenn alle in Vorschubrichtung jeweils hintereinander angeordneten Taster jeweils an einem gemeinsamen Steuergestänge befestigt sind, das bei Rückverschiebung eines dieser Taster ein Schaltelement gegenüber dem Sensor verschiebt.

Dabei ist es vorteilhaft, wenn die Taster Klinken sind, die jeweils um eine parallel zur Förderebene und quer zur Vorschubrichtung angeordnete Achse verschwenkbar sind, von der vorgeförderten Blechtafel angehoben werden und nach dem Passieren der Blechtafel-Hinterkante selbsttätig in den Blechtafel-Rückschubweg einfallen.

Das Steuergestänge für alle in Vorschubrichtung jeweils hintereinander angeordnete Taster kann eine parallel zur Vorschubrichtung verschiebbar gelagerte Stange sein, an der die Taster z. B. über eine Klemmverbindung festgelegt sind. Dadurch können Blechscheren in einfacher Weise mit der neuen Fehler-Detektionseinrichtung nachgerüstet werden.

Eine verbesserte Ausführungsform ist dadurch gekennzeichnet, daß jeder Taster über die Position des ihm zugeordneten Anschlages hinaus rückverschiebbar ist, und daß in den Schaltweg des Schaltelementes ein zweiter Sensor ragt, der bei Überschreiten eines bestimmten Maximum-Schaltweges sein Ausgangssignal ändert. Hierdurch werden auch solche Streifen erfaßt, die geringfügig über die durch die beiden Anschläge markierte Linie hinaus zurückgeschoben werden, beispielsweise weil sich die beiden Anschläge etwas in die Hinterkante der Blechtafel eingearbeitet haben. Ein in dieser Schnittposition durchgeführter Trennschnitt würde zu einem zu breiten Streifen führen. Dies wird nunmehr durch den zweiten Sensor angezeigt.

Die Sensoren können jeweils durch Induktivschalter gebildet sein.

Auch bei z. B. sieben Anschlagpaaren sind somit erfindungsgemäß nur zwei Induktivschalter, in der verbesserten Ausführungsform insgesamt vier Induktivschalter erforderlich. Diese lassen sich problemlos dort anordnen, wo ausreichend Montageraum zur Verügung steht.

Die Induktivschalter können bei Feststellung eines Ausschuß-Streifens z. B. die Blechschere stillsetzen und/oder ein akustisches oder optisches Warnsignal auslösen. Erfindungsgemäß kann aber die Auswertungseinrichtung einen Abförderer umfassen, der den vom Sensor als zu schmal oder zu breit gemessenen Streifen aus dem weiteren Produktionsgang aussteuert. Dabei kann dieser Abförderer ein endloser Förderer sein, der oberhalb von einem den aus der Blechschere kommenden Streifen aufnehmenden Förderer angeordnet und mit auf den Streifen absenkbaren Streifenhaltern bestückt ist, die Permanentmagnete oder aber auch eine Vakuumeinrichtung sein können.

In der Zeichnung ist eine als Beispiel dienende Ausführungsform der Erfindung dargestellt. Es zeigen:

Figur 1 eine Blechschere in Seitenansicht;

Figur 2 in vergrößertem Maßstab und perspektivischer Darstellung den Einzugsbereich der Blechschere gemäß Figur 1;

Figur 3 in weiterhin vergrößertem Maßstab in Seitenansicht eine Fehler-Detektionseinrichtung;

Figur 4 eine Blechtafel mit angedeuteten Schnittlinien zur Herstellung der Streifen sowie der aus den Streifen auszustanzenden Deckeln und

Figur 5 in einer Darstellung gemäß Figur 4 eine gescrollte Blechtafel.

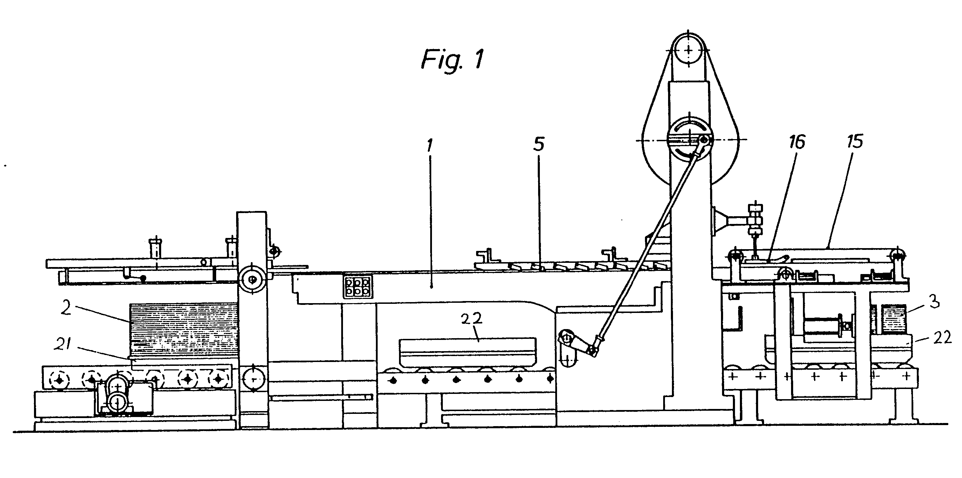

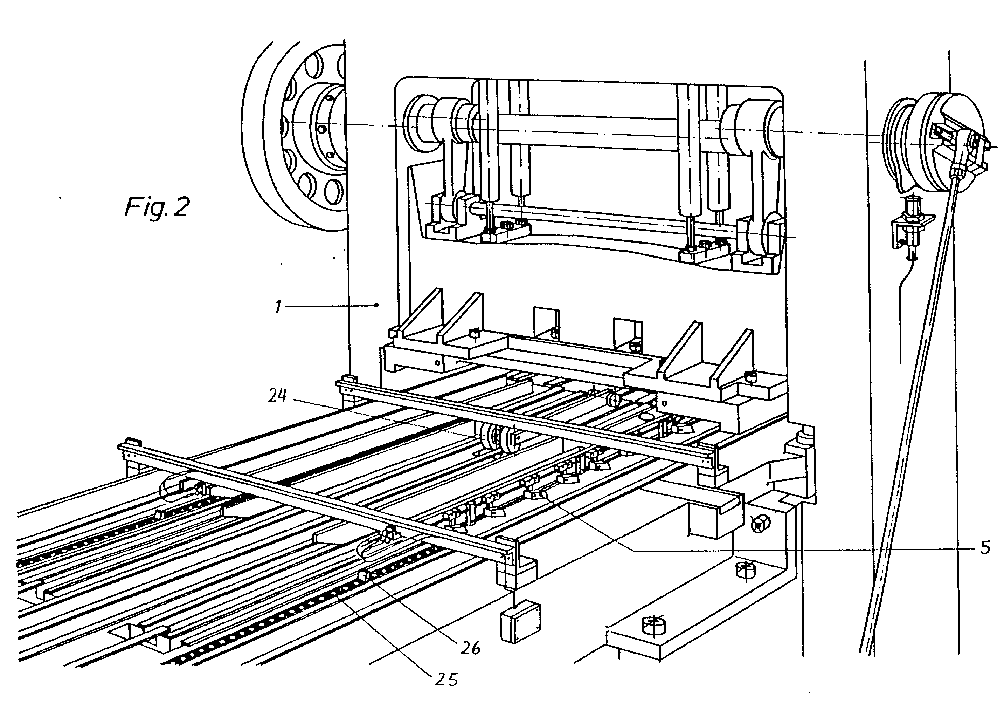

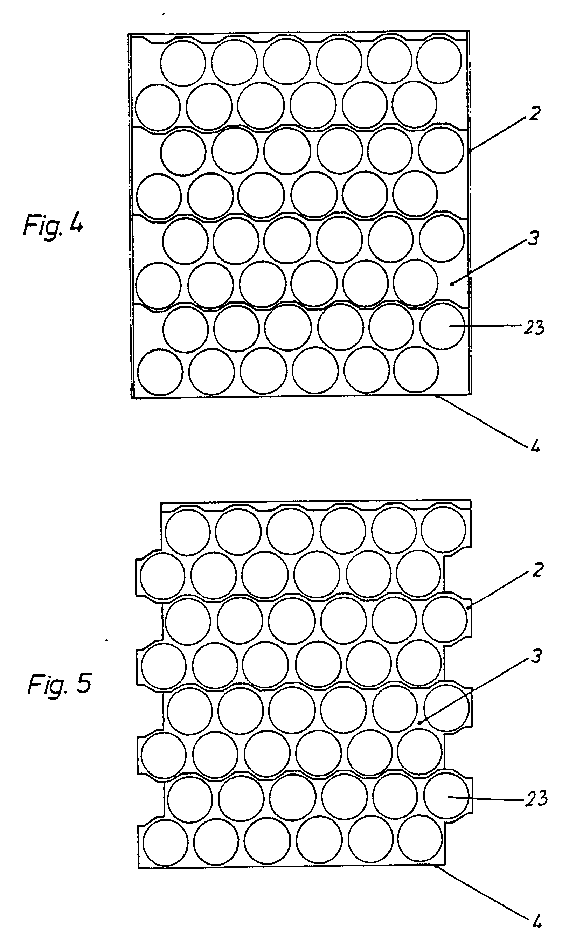

Die in Figur 1 dargestellte Blechschere 1 wird mit den in den Figuren 4 und 5 gezeigten Blechtafeln 2 beschickt, die der Blechschere 1 z. B. auf Paletten 21 gestapelt zugeführt werden. In der Blechschere 1 werden von jeder Blechtafel 2 Streifen 3 abgeschnitten (siehe Figuren 4 und 5), die hinter der Blechschere z. B. auf Paletten 22 abgestapelt werden, die zwischengelagert lund dann einem nicht dargestellten Stanzautomaten zugeführt werden, der aus den einzelnen Streifen 3 die in den Figuren 4 und 5 angedeuteten Deckel 23 ausstanzt. Die Figuren 1 und 2 lassen der ner Anschläge 5 erkennen, die als Klinken ausgebildet sind und gegen die die zu verarbeitende Blechtafel 2 mit ihrer Hinterkante 4 (siehe Figuren 4 und 5) von einer Rückzugseinrichtung 24 zurückgeschoben wird. Die Fehler-Detektionseinrichtung gemäß der Erfindung ist in den Figuren 1 und 2 aus Gründen der besseren Übersicht nicht dargestellt. Die Vorschubeinrichtung für die Blechtafeln 2 besteht aus Kettenbändern 25, die mit Nocken 26 bestückt sind, die sich gegen die Hinterkante 4 der Blechtafel 2 anlegen.

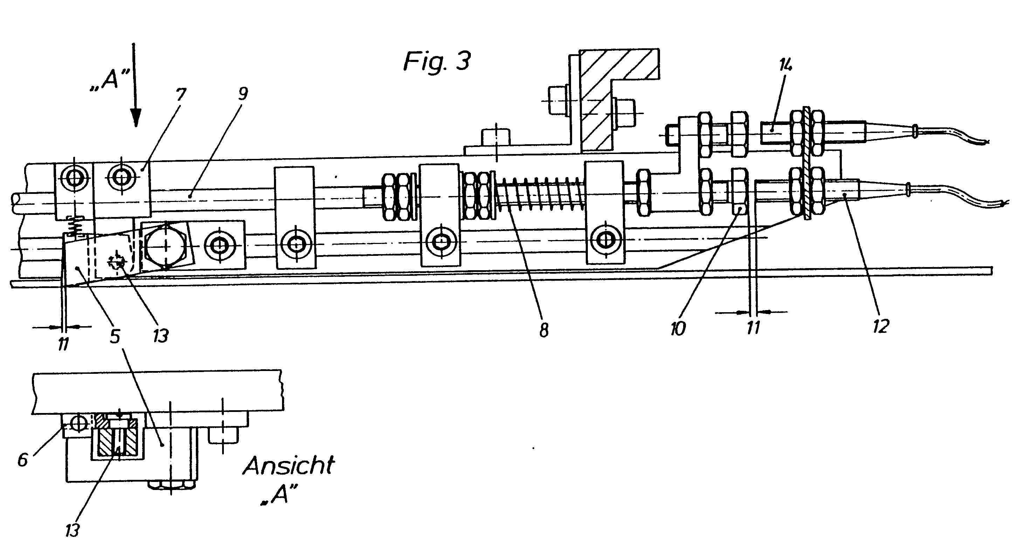

Figur 3 läßt eine Fehler-Detektionseinrichtung gemäß der Erfindung erkennen. Demnach ist jedem Anschlag 5 ein Taster zugeordnet, der aus einer Klinke 6 besteht und mit einem Klemmteil 7 an einer Stange 9 befestigt ist, die parallel zur Vorschubrichtung der Blechtafeln 2 verschiebbar gelagert ist und alle in Vorschubrichtung jeweils hintereinander angeordnete Taster 6,7 trägt. Die Taster-Klinke 6 überragt in Vorschubrichtung den ihr zugeordneten Anschlag 5 etwas und ist gegen die Wirkung einer Feder 8 zumindest bis auf die Position des zugeordneten Anschlages 5 rückverschiebbar gelagert. Wird eine Taster-Klinke 6 durch Beaufschlagung der Hinterkante 4 einer Blechtafel 2 zurückverschoben, verschiebt sie dadurch die Stange 9 (in Figur 3 nach rechts), die dadurch ein an ihrem Ende befestigtes Schaltelement 10, der ein Induktivschalter sein kann, um einen entsprechenden Schaltweg 11 verschiebt. In diesem Schaltweg 11 ragt ein Sensor 12, der bei Erreichen eines bestimmten, durch das Schaltelement 10 zurückgelegten Minimum-Schaltweges sein Ausgangssignal ändert. Die Ausgangssignale der beiden nebeneinanderliegenden Sensoren 12 steuern eine Auswertungseinrichtung.

Jede Taster-Klinke 6 ist um eine parallel zur Förderebene und quer zur Vorschubrichtung angeordnete Achse 13 verschwenkbar, wird von der vorgeförderten Blechtafel 2 angehoben und fällt nach dem Passieren der Blechtafel-Hinterkante 4 selbsttätig in den Blechtafel-Rückschubweg ein. Insoweit entspricht die Wirkungsweise der der Anschläge 5.

In dem dargestellten Ausführungsbeispiel ist jeder Taster 6, 7 über die Position des ihm zugeordneten Anschlages 5 hinaus rückverschiebbar; in den Schaltweg 11 des Schaltelementes 10 ragt ein zweiter Sensor 14, der bei Überschreiten eines bestimmten Maximum-Schaltweges sein Ausgangssignal ändert.

Gemäß dem in Figur 1 dargestellten Ausführungsbeispiel umfaßt die Auswertungseinrichtung einen Abförderer 15, der den vom Sensor 12, 14 als zu schmal oder zu breit gemessenen Streifen 3 aus dem weiteren Produktionsgang aussteuert. Dieser Abförderer 15 kann ein endloser Förderer sein, der oberhalb von einem den aus der Blechschere 1 kommenden Streifen 3 aufnehmenden Förderer angeordnet und mit auf den Streifen 3 absenkbaren Streifenhaltern 16 bestückt ist, die Permanentmagnete oder aber auch eine Vakuumeinrichtung sein können.

**Patentansprüche**

1. Fehler-Detektionseinrichtung mit einem Sensor und einer durch dessen Ausgangssignal gesteuerten Auswertungseinrichtung, zum Einbau in eine Blechschere (1), in der von einer Blechtafel (2) jeweils Streifen (3) gleicher Breite abgeschnitten werden, wobei die Blechtafel (2) taktweise unter dem Schnittwerkzeug um die gewünschte Streifenbreite plus ein Sicherheitsmaß vorgefördert und dann durch eine Rückzugseinrichtung (24) um das genannte Sicherheitsmaß entgegen der genannten Vorschubrichtung mit ihrer Blechtafel-Hinterkante (4) gegen in den Blechtafel-Rückschubweg eingesteuerte, die exakte Streifenbreite definierende Anschläge (5) zurückgeschoben wird, von denen für jede Blechtafelposition zwei mit Abstand nebeneinander angeordnet sind, dadurch gekennzeichnet, daß jedem Anschlag (5) ein ihn in Vorschubrichtung etwas überragender Taster (6, 7) zugeordnet ist, der mit dem zugeordneten Anschlag (5) in den Rückschubweg der Blechtafel (2) einsteuerbar und gegen die Wirkung einer Feder (8) zumindest bis auf die Position des zugeordneten Anschlages (5) um einen Schaltweg (11) rückverschiebbar gelagert ist, in den ein Sensor (12) ragt, der bei Erreichen eines bestimmten Minimum-Schaltweges sein Ausgangssignal ändert, das zusammen mit dem Ausgangssignal des zweiten Sensors (12) eine Auswertungseinrichtung steuert.

2. Einrichtung nach Anspruch 1, dadurch gekennzeichnet, daß alle in Vorschubrichtung jeweils hintereinander angeordneten Taster (6, 7) jeweils an einem gemeinsamen Steuergestänge (9) befestigt sind, das bei Rückverschiebung eines dieser Taster (6, 7) ein Schaltelement (10) gegenüber dem Sensor (12) verschiebt.

3. Einrichtung nach Anspruch 1 oder 2, dadurch gekennzeichnet, daß die Taster (6, 7) Klinken (6) sind, die jeweils um eine parallel zur Förderebene und quer zur Vorschubrichtung angeordnete Achse (13) verschwenkbar sind, von der vorgeförderten Blechtafel (2) angehoben werden und nach dem Passieren der Blechtafel-Hinterkante (4) selbsttätig in den Blechtafel-Rückschubweg einfallen.

4. Einrichtung nach Anspruch 2 oder 3, dadurch gekennzeichnet, daß das Steuergestänge (9) für alle in Vorschubrichtung jeweils hintereinander angeordneten Taster (6, 7) eine parallel zur Vorschubrichtung verschiebbar gelagerte Stange ist.

5. Einrichtung nach Anspruch 2, 3 oder 4, dadurch gekennzeichnet, daß jeder Taster (6, 7) über die Position des ihm zugeordneten Anschlages (5) hinaus rückverschiebbar ist, und daß in den Schaltweg (11) des Schaltelementes (10) ein zweiter Sensor (14) ragt, der bei Oberschreiten eines bestimmten Maximum-Schaltweges sein Ausgangssignal ändert.

6. Einrichtung nach einem der vorhergehenden Ansprüche, dadurch gekennzeichnet, daß die Sensoren (12, 14) jeweils durch Induktivschalter gebildet sind.

7. Einrichtung nach einem der vorhergehenden Ansprüche, dadurch gekennzeichnet, daß die Auswertungseinrichtung einen Abförderer (15) umfaßt, der den von den Sensoren (12, 14) als zu schmal oder zu breit gemessenen Streifen (3) aus dem weiteren Produktionsgang aussteuert.

8. Einrichtung nach Anspruch 7, dadurch gekennzeichnet, daß der Abförderer (15) ein endloser Förderer ist, der oberhalb von einem den aus der Blechschere (1) kommenden Streifen (3) aufnehmenden Förderer angeordnet und mit auf den Streifen (3) absenkbaren Streifenhaltern (16) bestückt ist.

9. Einrichtung nach Anspruch 8, dadurch gekennzeichnet, daß die Streifenhalter (16) Permanentmagnete sind.

10. Einrichtung nach Anspruch 8, dadurch gekennzeichnet, daß die Streifenhalter (16) eine Vakuumeinrichtung sind.

**Claims**

1. Error detection means comprising sensor means controlling by its output signal evaluating means for installation in a plate-shearing machine (1) where strips (3) of equal width are sheared off from a sheet plate (2), whereby said sheet plate (2) is advanced gradually under the cutting tool by the desired width of strip plus a safety factor and then fed back by retraction means (24) by said safety factor opposite to said feed direction till its sheet plate rear edge (4) abuts catches (5) defining the exact width of strip and being positioned into the sheet plate feed back path, two of said catches (5) are arranged with distance side by side for defining each sheet plate position,
characterized in that
one calipers (6, 7) is associated to each of said catches (5), said calipers projects above the catch (5) in feed direction, is together with the associated catch (5) insertable into the sheet plate feed back path and is slidable backwards against the action of a spring (8) at least to the position of the associated catch (5) by a feed motion (11) in which a sensor (12) is extending which alters its output signal upon reaching a specific minimum feed motion, said output signal together with the output signal of the second sensor (12) controls evaluation means.

2. Means according to claim 1, characterized in that all calipers (6, 7) are tandem joined in feed direction and are fastened to a common control linkage (9) which shifts an actuating element (10) relative to said sensor (12) when one of said calipers (6, 7) is shifted backwards.

3. Means according to claim 1 or 2, characterized in that said calipers (6, 7) are latches (6) which are tiltable around an axis (13) arranged parallely to the conveying plane and transversely to the feed direction, said latches are lifted by the advanced sheet plate (2) and drop automatically into the sheet plate feed back path after the sheet plate rear edge (4) has passed.

4. Means according to claim 2 or 3, characterized in that for all tandem joined calipers (6, 7) the control linkage (9) is a bar slidable parallel to the feed direction.

5. Means according to claim 2, 3 or 4, characterized in that each calipers (6, 7) is slidable backwards beyond the position of the associated catch (5), and that a second sensor (14) extends into the feed motion (11) of the actuating element (10) and alters its output signal upon exceeding a certain maximum feed motion.

6. Means according to one of the preceding claims, characterized in that the sensors (12, 14) are inductive switches.

7. Means according to one of the preceding claims, characterized in that the evaluation means comprises a conveyor (15) sorting out from further production process that strip (3) which has been measured by the sensors (12, 14) as being too narrow or too broad.

8. Means according to claim 7, characterized in that said conveyor (15) is an endless conveyor which is positioned above a conveyor carrying the strip (3) coming from the plate-shearing machine (1), said endless conveyor is provided with strip holders (16) which can be lowered on the strips (3).

9. Means according to claim 8, characterized in that said strip holders (16) are permanent magnets.

10. Means according to claim 8, characterized in that said strip holders (16) are a vacuum means.

## Revendications

1. Appareil de détection d'erreur, comportant un capteur et un appareil d'exploitation commandé par le signal de sortie du capteur, pour incorporation dans une cisaille à tôles (1) dans laquelle chaque panneau de tôle (2) est découpé en des bandes (3) d'égale largeur, et dans laquelle le panneau de tôle (2) est avancé de manière cadencée sous l'outil de coupe, d'une longueur égale à la largeur de bande voulue plus une marge de sécurité, et est ensuite reculé au moyen d'un dispositif de rappel en arrière (24), de la valeur de la marge de sécurité précitée, en sens inverse de la direction d'avance précitée, avec appui du bord arrière (4) du panneau de tôle contre des butées (5) amenées dans le parcours de recul du panneau de tôle et définissant la largeur exacte des bandes, tandis qu'il est prévu pour chaque position de panneau de tôle deux des butées précitées disposées l'une à côté de l'autre avec un certain écart entre elles, caractérisé en ce qu'à chaque butée (5) est associé un palpeur (6, 7) qui la dépasse quelque peu dans la direction de l'avance, et qui est engageable, avec la butée (5) associée, dans le parcours de recul du panneau de tôle (2) et qui est monté avec possibilité d'accomplir en reculant, contre l'action d'un ressort (8), au moins jusqu'à la position de la butée (5) associée, un parcours de commutation (11) dans lequel fait saillie un capteur (12), qui, lorsqu'un certain parcours de commutation minimum est accompli, modifie son signal de sortie qui, avec le signal de sortie du deuxième capteur (12), pilote un appareil d'exploitation.

2. Appareil conforme à la revendication 1, caractérisé en ce que tous les palpeurs (6, 7) disposés les une derrière les autres dans la direction de l'avance sont fixés chacun à une tringlerie de commande (9) commune, qui déplace un élément de commutation (10) vis-à-vis du capteur (12) lorsque l'un de ces palpeurs (6, 7) recule.

3. Appareil conforme à l'une des revendications 1 ou 2, caractérisé en ce que les palpeurs (6, 7) sont des cliquets (6), qui sont chacun montés à bascule autour d'un axe (13) disposé parallèlement au plan de convoyage et transversalement à la direction de l'avance, qui sont soulevés par le panneau de tôle (2) convoyé dans le sens de l'avancement, et qui, après le passage du bord arrière (4) du panneau de tôle, tombent automatiquement dans le parcours de recul du panneau de tôle.

4. Appareil conforme à l'une des revendications 2 ou 3, caractérisé en ce que la tringlerie de commande (9) destinée à tous les palpeurs (6, 7) disposés les uns derrière les autres dans la direction de l'avance est une tringle montée de façon à pouvoir se déplacer parallèlement à la direction de l'avance.

5. Appareil conforme à l'une des revendications 2, 3 ou 4, caractérisé en ce que chaque palpeur (6, 7) est déplaçable vers l'arrière, au-delà de la position de la butée (5) qui lui est associée, et en ce que dans le parcours de commutation (11) de l'élément de commutation (10) fait saillie un deuxième capteur (14) qui modifie son signal de sortie lors du dépassement d'un certain parcours de commutation maximum.

6. Appareil conforme à l'une des revendications précédentes, caractérisé en ce que les capteurs (12, 14) sont constitués chacun par un commutateur inductif.

7. Appareil conforme à l'une des revendications précédentes, caractérisé en ce que l'appareil d'exploitation comprend un convoyeur d'évacuation (15), qui soustrait au processus ultérieur de production les bandes mesurées par les capteurs (12, 14) comme étant trop étroites ou trop larges.

8. Appareil conforme à la revendication 7, caractérisé en ce que le convoyeur d'évacuation (15) est un convoyeur sans fin, qui est disposé au-dessus d'un convoyeur qui reçoit les bandes (3) en provenance de la cisaille à tôles (1), et qui est muni de supports de bandes (16) pouvant être abaissés sur les bandes (3).

9. Appareil conforme à la revendication 8, caractérisé en ce que les supports de bandes (16) sont des aimants permanents.

10. Appareil conforme à la revendication 8, caractérisé en ce que les supports de bandes (16) sont constitués par un dispositif à vide.

Fig. 1

0 122 297

*Fig. 2*

*Fig. 3*

„A"

7  9  14

8  10  11  12

11  5  13

6  13

*Ansicht „A"*

0 122 297

*Fig. 4*

*Fig. 5*